(19) Europäisches Patentamt
European Patent Office
Office européen des brevets

(11) EP 0 954 143 B1

(12) EUROPEAN PATENT SPECIFICATION

(45) Date of publication and mention
of the grant of the patent:
**14.02.2007 Bulletin 2007/07**

(51) Int Cl.:
***H04L 25/02*** (2006.01)

(21) Application number: **99303282.0**

(22) Date of filing: **27.04.1999**

(54) **Iterative channel estimation**

Iterative Kanalschätzung

Estimation de canal itérative

(84) Designated Contracting States:
**DE FI FR GB SE**

(30) Priority: **30.04.1998 EP 98303418**

(43) Date of publication of application:
**03.11.1999 Bulletin 1999/44**

(73) Proprietor: **LUCENT TECHNOLOGIES INC.
Murray Hill, New Jersey 07974-0636 (US)**

(72) Inventors:
• **Bar-David, Israel
Haifa 34982 (IL)**
• **Yan, Ran-Hong
Marlborough,
Wiltshire SN8 1XB (GB)**
• **Luschi, Carlo
Duke Street,
Oxford OX2 OQT (GB)**

(74) Representative: **Williams, David John et al
Page White & Farrer
Bedford House
John Street
London, WC1N 2BF (GB)**

(56) References cited:
**WO-A-94/00924**

• BAIER A: "Correlative and iterative channel estimation in adaptive viterbi equalizers for TDMA mobile radio systems" STOCHASTISCHE MODELLE UND METHODEN IN DER INFORMATIONSTECHNIK (STOCHASTIC MODELS AND METHODS IN INFORMATION TECHNOLOGY), NURNBERG, WEST GERMANY, 12-14 APRIL 1989, vol. 107, pages 363-368, XP002077505 ISSN 0341-0196, ITG-Fachberichte, 1989, West Germany
• KAZUHIKO FUKAWA ET AL: "ADAPTIVE EQUALIZATION WITH RLS-MLSE FOR FREQUENCY-SELECTIVE FAST FADING MOBILE RADIO CHANNELS" COUNTDOWN TO THE NEW MILENNIUM, PHOENIX, DEC. 2 - 5, 1991, vol. 1, 2 December 1991 (1991-12-02), pages 548-552, XP000326032 INSTITUTE OF ELECTRICAL AND ELECTRONICS ENGINEERS
• D'AVELLA R ET AL: "An adaptive MLSE receiver for TDMA digital mobile radio" IEEE JOURNAL ON SELECTED AREAS IN COMMUNICATIONS, JAN. 1989, USA, vol. 7, no. 1, pages 122-129, XP002077516 ISSN 0733-8716
• CHANG K -H ET AL: "ITERATIVE JOINT SEQUENCE AND CHANNEL ESTIMATION FOR FAST TIME-VARYING INTERSYMBOL INTERFERENCE CHANNELS" COMMUNICATIONS - GATEWAY TO GLOBALIZATION. PROCEEDINGS OF THE INTERNATIONAL CONFERENCE ON COMMUNICATIONS, SEATTLE, JUNE 18 - 22, 1995, vol. 1, 18 June 1995 (1995-06-18), pages 357-361, XP000533010 INSTITUTE OF ELECTRICAL AND ELECTRONICS ENGINEERS

• BAIER A ET AL: "Bit synchronization and timing sensitivity in adaptive Viterbi equalizers for narrowband-TDMA digital mobile radio systems" 38TH IEEE VEHICULAR TECHNOLOGY CONFERENCE: 'TELECOMMUNICATIONS FREEDOM - TECHNOLOGY ON THE MOVE' (CAT. NO.88CH2622-9), PHILADELPHIA, PA, USA, 15-17 JUNE 1988, pages 377-384, XP002077506 1988, New York, NY, USA, IEEE, USA

• WU L ET AL: "A NEW SHORT-BLOCK DIGITAL TRANSMISSION SCHEME WITH ADAPTIVE MLSE FOR MOBILE RADIO CHANNELS" PROCEEDINGS OF THE VEHICULAR TECHNOLOGY CONFERENCE, STOCKHOLM, JUNE 8 - 10, 1994, vol. 1, no. CONF. 44, 8 June 1994 (1994-06-08), pages 243-247, XP000496671 INSTITUTE OF ELECTRICAL AND ELECTRONICS ENGINEERS

• MIGNONE V ET AL: "CD3-OFDM: A NEW CHANNEL ESTIMATION METHOD TO IMPROVE THE SPECTRUM EFFICIENCY IN DIGITAL TERRESTRIAL TELEVISION SYSTEMS" INTERNATIONAL BROADCASTING CONVENTION 1994, no. 413, 14 September 1995 (1995-09-14), pages 122-128, XP000617513

**Description**

This invention relates to channel and data estimation methods and apparatus in mobile radio communications and in particular to a equalizer which compensates for channel distortion by iterating data and channel estimation procedures on a block-by-block basis.

In digital mobile radio communications, transmission channels suffer from severe distortion due to frequency selective fading. In addition, channel characteristics are normally time-varying due to the relative motion of fixed and mobile stations. Therefore, in order to allow for reliable transmission, the receiver must be able to estimate and compensate for channel distortion on a block-by-block basis. Various channel estimation and channel equalization methods have been proposed in literature and are commonly used in practical systems such as mobile cellular communication systems employing the European wireless digital cellular standard "GSM". In most cases the receiver performs channel equalization on the received signal using Maximum Likelihood (ML) or Maximum A Posteriori (MAP) probability data estimation, based on the knowledge of the Channel Impulse Response (CIR). Most practical systems employ training sequences to enable the CIR to be estimated before the equalizer start-up. Fast time varying, fading channels require the changing channel response to be tracked and adjusted dynamically by the receiver for the duration of the received signal. Tracking of the CIR may be performed by means of decision directed algorithms, where tentative decisions from the equalizer are used to update the initial CIR estimate. Examples of receiver systems which perform channel estimation and channel equalization may be found in the following articles: "Bit Synchronisation and Timing Sensitivity in Adaptive Viterbi Equalizers for Narrowband TDMA Digital Mobile Radio Systems", A. Baier, G. Heinrich and U. Wellens, Proc. IEEE Vehicular Technology Conference, June 1988, pp 377-384 [Reference 1]; "Correlative and Iterative Channel Estimation in Adaptive Viterbi Equalizers for TDMA Mobile Radio", ITG-Fachbericht No. 107, VDE Verlag, April 1989, pp 363-368 [Reference 2]; "Simulation and Hardware Implementation of a Viterbi Equalizer for the GSM TDMA Digital Mobile Radio System", A. Baier, G. Heinrich, P. Shoeffel and W. Stahl, Proc. 3rd Nordic Seminar on Digital Land Mobile Radio Communications, September 1988 pp 13.7.1.- 13.7.5, [Reference 3].

The effectiveness of the channel estimation strategy, and thus the overall equalization performance, depends heavily on the reliability of the initial CIR estimate. There is a requirement for an improved estimation strategy which can function with or without training sequences.

According to a first aspect of the invention there is provided a method according to claim 1.

According to a second aspect of the invention there is provided apparatus according to claim 4.

The invention provides a reduced-noise CIR estimate, which is needed for the equalization of the received signal, in the case of multipath propagation environment, and thus provides improved receiver performance.

The equalizer performance is improved considerably by iterating the data and channel estimation procedure on a block-by-block basis. In particular, after a first pass in which the initial channel estimate is obtained by resorting to the known training sequence bits, one or more iteration can be performed, using data symbol decisions from the equalizer output derived in the previous iteration, together with the original training sequence, to obtain a new CIR estimate.

In systems in which the information bits are encoded (and possibly interleaved) prior to modulation, the above strategy can be further improved by using the more reliable decisions obtained by *a)* re-encoding (and possibly re-interleaving) the channel decoder output, or *b)* simply taking (and possibly re-interleaving) the most significant bit of the A Posteriori values for the coded bits provided by a soft-in/soft-out channel decoder (see e.g. G. Bauch H. Khorram, and J. Hagenauer. "Iterative Equalization and Decoding in Mobile Communication Systems", Proc. *EPMCC* '97, ITG-Fachbericht No. 145, VDE Verlag, October 1997, pp. 307-312) [Reference 4]. Computer simulations carried out for the particular case of the GSM TCH/FS transmission scheme show that, as compared with the conventional channel estimation approach (that is, correlative channel sounding by training sequence), the invention provides a significant performance improvement even with just one iteration.

The invention may also be used in those cases where no training sequence is available and the data estimation is performed by starting with an arbitrary channel estimate.

A detailed description of a practical digital radio receiver is described below, by way of example, and with reference to the following figures in which:

Figure 1 shows in outline a typical GSM digital radio receiver;
Figure 2 illustrates the GSM "normal" burst format; and
Figure 3 illustrates a digital radio receiver according to the invention in the case of feedback from the equaliser output.
Figure 4 illustrates a digital radio receiver according to the invention in the case of feedback from the decoder output.

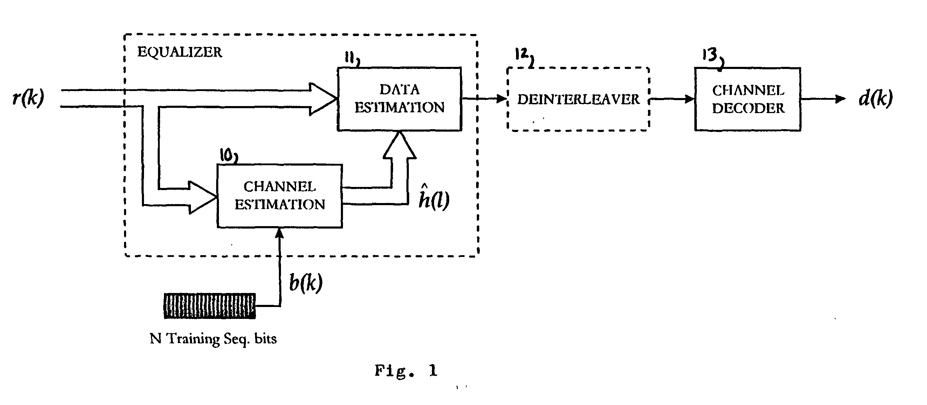

A typical implementation of a digital radio receiver is shown in Figure 1. The discrete-time received signal can be written as

$$r(k) = \sum_{l}^{L-1} b(k-l) h(l) + n(k) \tag{1}$$

where $b(k) \in \{-1,1\}$ are the transmitted data symbols, or the (known) training sequence symbols, h(1), 1 = 0, 1,..., L-1 represents the samples of the Channel Impulse Response (CIR) and $\eta(k)$ indicates white Gaussian noise with zero mean and variance $\sigma^2$.

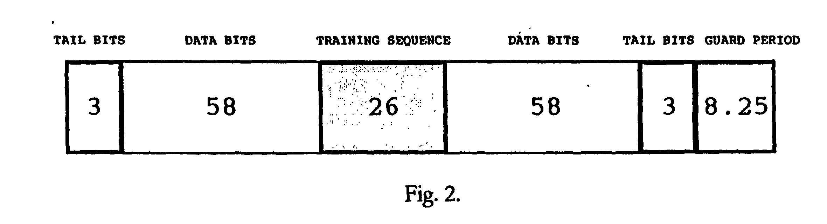

The receiver must first estimate the CIR h(*l*), before beginning the data estimation process. In some cases, e.g. in a GSM standard receiver, the initial CIR estimation is commonly performed by means of correlative channel sounding, see for example the above mentioned references 1 and 3. The samples of the CIR estimate are obtained by correlating the received signal r(k) with N=16 bits b(k) out of the 26 bits of training sequence, shown in figure 2. The result of the correlation is:

$$\hat{h}(l) = (1 / N) \sum_{i=0}^{N-1} b(i) r(l + i) \tag{2}$$

where $\hat{h}(l)$ = 0, 1, ..., L-1 represents the samples of the estimated CIR.

In the case of ML channel estimation on *l* obtains:

$$\hat{h} = [\hat{h}(0), \hat{h}(1), ..., \hat{h}(L-1)]^T = (\mathbf{B}^T\mathbf{B})^{-1}\mathbf{B}^T\mathbf{r} \tag{3}$$

where

$$r = [r(0), r(1), ..., r(N-1)]^T$$
$$B = [b(0), b(1), ..., b(N-1)]^T$$
$$b(i) = [b(i), b(i-1), ..., b(i-L+1)]^T$$

It can be seen that, due to the good autocorrelation properties of the GSM training sequence ($B^TB \cong NI$), and equation 2 is the particular case of the more general ML channel estimation technique (equation 3). Once the channel estimate is available, the estimation of the data symbol sequence is performed. If the channel cannot be considered approximately constant within one burst, the initial channel estimate may be updated during the burst by using tentative decisions at the equalizer output, see reference 1.

In the case where the information data are encoded (and interleaved), the equalizer output sequence is finally (de-interleaved and)decoded, as shown in Figure 1.

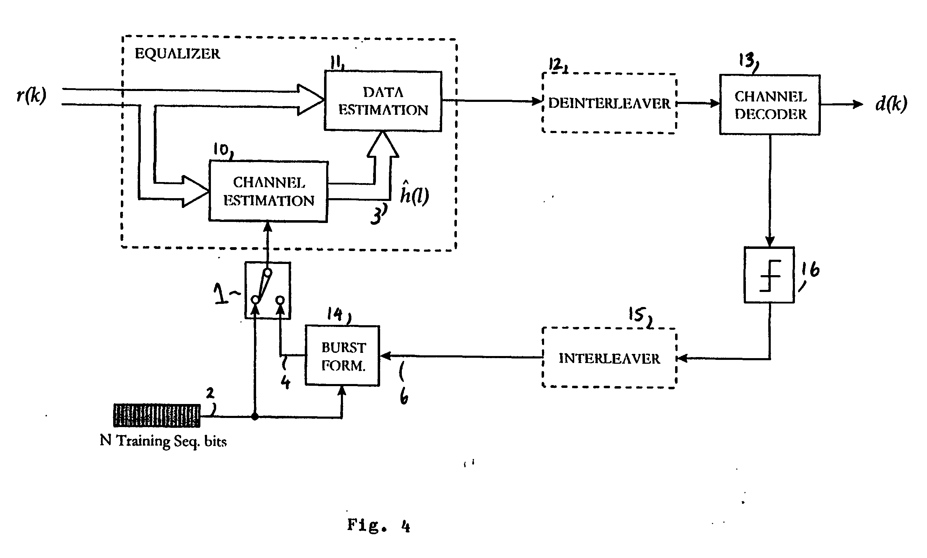

An iterative joint data and channel estimation procedure performed on a burst-by-burst basis have been proposed by K.H. Chang and C.N. Georghiades in "Iterative Join Sequence and Channel Estimation for Fast Time-Varying Intersymbol Interference", Proc. *IEEECC'95,* Seattle, W.A. 1995, pp. 357-361 [Reference 5]. In this work, after a first pass where an initial channel estimate is obtained by resorting to the known training sequence bits, one or more iterations can be performed where data symbol decisions at the equalizer output for the previous iteration are employed to obtain a new initial CIR estimate by the ML approach (3). However, the above ML approach requires matrix inversion operations, which involve a significant implementation complexity. On the other hand, the symbol decision sequence fed back from the equalizer output does not posses in general the autocorrelation properties required by the economically advantageous channel sounding approach (2). In addition, and in contrast to the use of known training sequence bits, the symbol decision feedback may contain a certain number of errors. For this reason, the use of correlative channel sounding has not been proposed for channel estimators which do not rely on known training sequence bits. An advantage of the invention is in the much lower implementation complexity with respect to the scheme proposed in reference 5. In addition, although the decision feedback sequence in general does not posses the autocorrelation properties required by the channel sounding approach, and although the decision feedback sequence may contain a significant number of errors, these drawbacks are more than compensated by the fact that, when the length of the sounding sequence is enlarged, the estimation noise is drastically reduced. In contrast to reference 5, the invention uses decision feedback from the decoder output as shown in Figure 4.

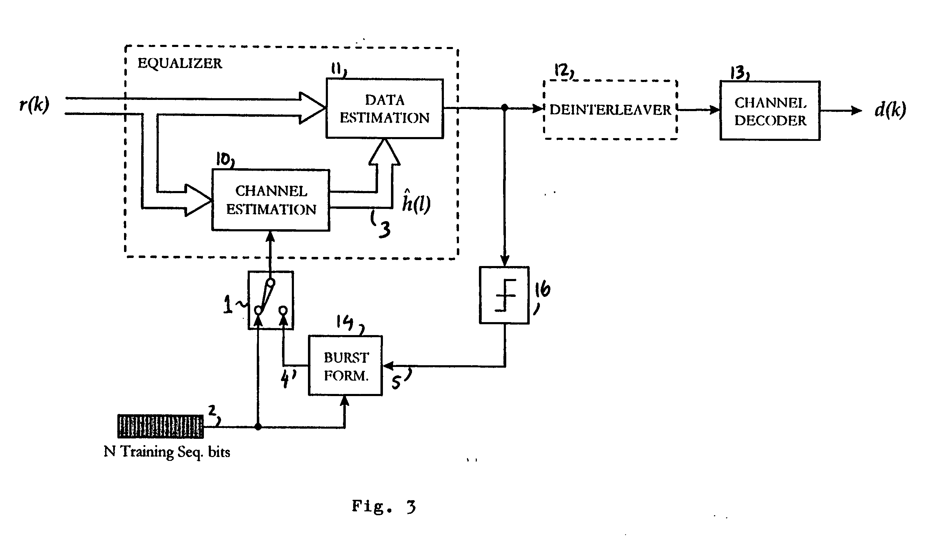

An implementation of a receiver according to the invention is shown in Fig.3&4. The invention includes iterating the processes of channel estimation, data estimation, and decoding, performed by the conventional receiver of Fig. 1.

The iteration procedure can be summarised as follows:

1) For each received burst, a first pass is performed in which channel and data estimation are obtained by the conventional approach of the prior art. As an example, in the case of GSM, the initial channel estimation can be performed by using correlative channel sounding estimation (2) and possibly updated during the burst by a decision directed algorithm. In Fig. 3 the switch 1 selects the input signal 2. The initial channel estimate is represented by the complex signal 3.

2) One or more iteration are then performed, in which a feedback of the decisions from either the equalizer output as shown in Figure 3, or the decoder output, as shown in Figure 4, is used to provide an increased length of the sounding data sequence, as compared with the sequence employed in the initial channel estimation. As an example, in the case of the GSM TCH/FS burst (ETSI GSM 05.02: "Digital Cellular Telecommunications System (Phase 2+); Multiplexing and Multiple Access on the Radio Path", Version 5.2.0, November 1996), the feedback of the decisions for the 114 data bits provides a pseudo training sequence of N=142 bits. Using this sequence, the new channel estimation may be performed according to equation 2, as used on the first pass of the iteration. In Fig. 3, for each iteration after the first pass, the switch 1 selects the pseudo training sequence, signal 4). This sequence is obtained by formatting the data bits/output of the slicer 16 and the original training sequence bits (signal 2) in the actual burst structure. In the case of decision feedback from the equalizer output, as shown in Figure 3, the slicer 16 selects the input signal at the output of block 11 and provides the output signal on line 5.

In systems where the information bits are encoded (and possibly interleaved) prior to modulation, the performance of the receiver of figure 3 can be further improved by using a feedback of the more reliable decisions obtained from the decoder output as shown in Figure 4. In a receiver implementing an iterative equalization and decoding scheme, the symbol decisions can be obtained from the a Posteriori values for the coded bits provided by a soft-in/soft-out channel decoder (see e.g. reference 4).

In the case of feedback from the decoder output, the slicer 16 selects the signal at the output of the block 13. The block 14 receives the input signal 6, which represents a) the re-encoded (and re-interleaved) version of the channel decoder hard-output, or b) the (re-interleaved) most significant bit of the log-likelihood ratios (or L-values) for the coded bits provided by a soft-in/soft-out decoder, typically employed in an iterative equalization and decoding scheme (see e.g. Reference 4). Apart from this difference, the channel estimator functions according to the same strategy described for steps (i) and (2) above.

Simulation results prove that, in the case of GSM system, the invention provides an improvement of about 0.8-1.2 dB in terms of receiver sensitivity after just one iteration. The improvement is about 0.8 dB using the data estimates provided by the equalizer and about 1.2 dB using the feedback from the output of the channel decoder. This, in addition to the low implementation complexity, especially if compared to the use of a ML channel estimator, makes the invention particularly suitable for digital mobile radio receivers.

The iterative strategy with decision feedback from the channel decoder output can also be used in those cases where no training sequence is available and the data estimation is performed starting with an arbitrary channel estimate.

**Claims**

1.    A method of estimating channel impulse response and data in a signal transmitted over a channel in a communication system, the method comprising:

a) estimating an initial channel impulse response by correlating the signal with a training sequence using correlative channel sounding;
b) estimating the data in the signal using the estimated channel impulse response; and
c) outputting the estimated data;
**characterised in that** the method further comprises at least one iteration of the following steps:
d) generating a pseudo training sequence based on the training sequence and the outputted estimated data;
e) obtaining an improved channel impulse response estimate by:

correlating the signal with the pseudo training sequence using correlative channel sounding;

f) estimating the data in the signal using the improved channel impulse response estimate; and

g) outputting the estimated data

2. A method as claimed in claim 1 **characterised in that** the signal is transmitted in bursts.

3. A method as claimed in claim 2 **characterised in that** the channel impulse response is estimated for each burst.

4. Apparatus for estimating channel impulse response and data in a signal transmitted over a channel in a communication system comprising:

a channel impulse response estimator (10) for estimating the channel impulse response, said channel impulse response estimator comprising means for correlating the signal with a training sequence using correlative channel sounding, and having an input for receiving said transmitted signal and an output; and

a data estimator (11) for providing an estimate of data in the transmitted signal using the estimated channel impulse response, said data estimator having an input for receiving said estimated channel impulse response, an input for receiving said transmitted signal and an output;

**characterised in that** the apparatus further comprises:

generating means (14) for generating a pseudo training sequence based on the training sequence and the output from the data estimator, having an input for receiving said training sequence and, an input coupled to said output of said data estimator and an output for outputting the pseudo training sequence;

wherein:

the channel impulse response estimator (10) further comprises an input for receiving said pseudo training sequence from the output of the generating means, and is adapted to obtain an improved channel impulse response estimate using the pseudo training sequence and to provide said improved channel impulse response estimate to said data estimator (11).

**Patentansprüche**

1. Verfahren zum Abschätzen einer Kanalimpulsantwort und von Daten in einem über einen Kanal eines Kommunikationssystems übertragenen Signal, umfassend:

a) Abschätzen einer Anfangs-Kanalimpulsantwort durch Korrelieren des Signals mit einer Lernsequenz unter Verwendung einer korrelativen Kanalvermessung;

b) Abschätzen der Daten in dem Signal unter Verwendung der abgeschätzten Kanalimpulsantwort; und

c) Ausgeben der abgeschätzten Daten,

**dadurch gekennzeichnet, dass** das Verfahren außerdem mindestens eine Iteration der folgenden Schritte aufweist:

d) Erzeugen einer Pseudo-Lernsequenz basierend auf der Lernsequenz und den ausgegebenen abgeschätzten Daten;

e) Erhalten einer verbesserten Kanalimpulsantwort-Abschätzung durch Korrelieren des Signals mit der Pseudo-Lernsequenz und Verwendung der korrelativen Kanalvermessung;

f) Abschätzen der Daten in dem Signal unter Verwendung der verbesserten Kanalimpulsantwort-Abschätzung; und

g) Ausgeben der abgeschätzten Daten.

2. Verfahren nach Anspruch 1, **dadurch gekennzeichnet, dass** das Signal in Bursts übertragen wird.

3. Verfahren nach Anspruch 2, **dadurch gekennzeichnet, dass** die Kanalimpulsantwort für jeden Burst abgeschätzt wird.

4. Verfahren zum Abschätzen der Kanalimpulsantwort und von Daten in einem über einen Kanal eines Kommunikationssystems übertragenen Signal, umfassend:

einen Kanal-Impulsantwort-Abschätzer (10) zum Abschätzen der Kanalimpulsantwort, wobei der Abschätzer eine Einrichtung zum Korrelieren des Signals mit einer Lernsequenz unter Verwendung der korrelativen Kanalvermessung, einen Eingang zum Empfangen des übertragenen Signals sowie einen Ausgang besitzt; und einen Datenabschätzer (11) zum Liefern einer Abschätzung von Daten in dem übertragenen Signal unter Verwendung der abgeschätzten Kanalimpulsantwort, wobei der Datenabschätzer einen Eingang zum Empfangen der abgeschätzten Kanalimpulsantwort, einen Eingang zum Empfangen des übertragenen Signals und einen Ausgang besitzt;

**dadurch gekennzeichnet, dass** die Vorrichtung weiterhin aufweist:

eine Erzeugungseinrichtung (14) zum Erzeugen einer Pseudo-Lernsequenz basierend auf der Lernsequenz und dem Ausgangssignal des Datenabschätzers, umfassend einen Eingang zum Empfangen der Lernsequenz und einen mit dem Ausgang des Datenabschätzers gekoppelten Eingang sowie einem Ausgang zum Ausgeben der Pseudo-Lernsequenz;

wobei
der Kanal-Impulsantwort-Abschätzer (10) außerdem aufweist: Einen Eingang zum Empfangen der Pseudo-Lernsequenz von dem Ausgang der Erzeugungseinrichtung, und dazu ausgebildet ist, eine verbesserte Kanalimpulsantwort-Abschätzung unter Verwendung der Pseudo-Lernsequenz zu erhalten, und um die verbesserte Kanalimpulsantwort-Abschätzung an den Datenabschätzer (11) zu liefern.

## Revendications

1. Procédé d'estimation de la réponse impulsionnelle d'un canal et de données dans un signal transmis sur un canal dans un système de communication, le procédé comprenant :

   a) l'estimation d'une réponse impulsionnelle initiale du canal par corrélation du signal avec une séquence d'apprentissage en utilisant un sondage de canal corrélatif ;
   b) l'estimation des données dans le signal en utilisant la réponse impulsionnelle estimée du canal ; et
   c) la délivrance des données estimées ;
   **caractérisé en ce que** le procédé comprend en outre au moins une itération des étapes suivantes :
   d) la production d'une pseudo-séquence d'apprentissage basée sur la séquence d'apprentissage et les données estimées délivrées ;
   e) l'obtention d'une réponse impulsionnelle améliorée du canal estimée par corrélation du signal avec la pseudo-séquence d'apprentissage en utilisant le sondage de canal corrélatif ;
   f) l'estimation des données dans le signal en utilisant l'estimée de la réponse impulsionnelle améliorée du canal; et
   g) la délivrance des données estimées.

2. Procédé selon la revendication 1, **caractérisé en ce que** le signal est transmis par salves.

3. Procédé selon la revendication 2, **caractérisé en ce que** la réponse impulsionnelle du canal est estimée pour chaque salve.

4. Appareil d'estimation de la réponse impulsionnelle du canal et de données dans un signal transmis sur un canal dans un système de communications, comprenant :

   un estimateur de réponse impulsionnelle du canal (10) pour estimer la réponse impulsionnelle du canal, ledit estimateur de réponse impulsionnelle du canal comprenant un moyen pour corréler le signal avec une séquence d'apprentissage en utilisant un sondage de canal corrélatif, et ayant une entrée pour recevoir ledit signal transmis et une sortie ; et
   un estimateur de données (11) pour fournir une estimée de données dans le signal transmis en utilisant la réponse impulsionnelle estimée du canal, ledit estimateur ayant une entrée pour recevoir ladite réponse impulsionnelle estimée du canal, une entrée pour recevoir ledit signal transmis et une sortie ;

**caractérisé en ce que** l'appareil comprend en outre :

un moyen générateur (14) pour générer une pseudo-séquence d'apprentissage basée sur la séquence d'apprentissage et la sortie de l'estimateur de données, ayant une entrée pour recevoir ladite séquence d'apprentissage et une entrée reliée à ladite sortie dudit estimateur de données et une sortie pour délivrer la pseudo-séquence d'apprentissage ;

dans lequel :

l'estimateur de réponse impulsionnelle du canal (10) comprend en outre une entrée pour recevoir ladite pseudo-séquence d'apprentissage de la sortie du moyen générateur, et est apte à obtenir une estimée de la réponse impulsionnelle améliorée du canal en utilisant la pseudo-séquence d'apprentissage et à fournir ladite estimée de la réponse impulsionnelle améliorée du canal audit estimateur de données (11).

EP 0 954 143 B1

EQUALIZER

11

DATA ESTIMATION

$r(k)$

10

CHANNEL ESTIMATION

$\hat{h}(l)$

12

DEINTERLEAVER

13

CHANNEL DECODER

$d(k)$

$b(k)$

N Training Seq. bits

Fig. 1

EP 0 954 143 B1

| TAIL BITS | DATA BITS | TRAINING SEQUENCE | DATA BITS | TAIL BITS | GUARD PERIOD |
|:---:|:---:|:---:|:---:|:---:|:---:|
| 3 | 58 | 26 | 58 | 3 | 8.25 |

Fig. 2.

Fig. 3

EQUALIZER

DATA ESTIMATION

CHANNEL ESTIMATION

$\hat{h}(l)$

DEINTERLEAVER

CHANNEL DECODER

$r(k)$

$d(k)$

BURST FORM.

N Training Seq. bits

EP 0 954 143 B1

Fig. 4

EP 0 954 143 B1